# EUROPEAN PATENT SPECIFICATION

(11) **EP 0 837 015 B1**
(45) Date of publication and mention of the grant of the patent: **16.05.2001**
(21) Application number: 97830514.2
(22) Date of filing: 10.10.1997
(51) Int. Cl.: B65G 47/08

(54) **Device for feeding selected groups of products**
Vorrichtung zum Zuführen von ausgewählten Gruppen von Gegenständen
Dispositif d'alimentation de lots sélectionnés de produits

(30) Priority: 18.10.1996 IT BO960523
(43) Date of publication of application: 22.04.1998
(73) Proprietor: AETNA GROUP S.p.A., 47827 Villa Verucchio (Rimini) (IT)
(72) Inventor: Bettini, Rodolfo, 40139 Bologna (IT)
(74) Representative: Lanzoni, Luciano

(56) References cited:
- EP-A- 0 659 664
- EP-A- 0 703 167
- GB-A- 1 527 574
- GB-A- 2 025 884
- GB-A- 2 155 426

## Description

The present invention relates to a machine for selecting groups of continuously fed products, particularly a machine for packaging groups of bottles by means of heat-shrinking plastic film, in accordance with the preambule of claim 1. Such a machine is known from EP-A-703167 of the same applicant.

Within the field of the aforesaid automatic machine it is known that the production line (which is tasked with defining and selecting a group of bottles, then package it according to different criteria) comprises, in succession: a station for continuously feeding bottles (hereinafter we shall refer to this product, though it is applicable to other types of containers such as cans and the like) located upstream of the machine with respect to a line of advance of the bottles themselves.

The latter advance on multiple rows of defined width and one behind the other on a horizontal conveyor belt towards an intermediate selection station able to define the format of the group of bottles to be wrapped (or their number), and comprising a second conveyor belt, also horizontal. Lastly a station for wrapping the group of bottles selected with a length of plastic film, preferably heat-shrinking.

To obtain a proper separation into predefined groups of bottles, the aforesaid selection station is equipped (see patent application IT - BO93A000428 by the same Applicant) with a first wall, movable vertically in the two directions and located in correspondence with the final end of the feeding station to stop or let advance the bottles towards an intermediate pre-selection station, placed between the feeding station and the selection station. This intermediate station is equipped with a second vertical wall, placed at a distance from the first wall equal to a defined size of the group of bottles to be selected, and adjustable as a function of the aforesaid size.

The second wall is also movable vertically in the two directions and in phase with the first one, in the sense that when the first wall is in a raised position interfering with the front of the selected group of bottles, the second wall is in an exclusion position and vice versa: in this way, when a certain number of bottles has moved beyond the first point of interference on the plane, a first subdivision of a group of bottles from the continuous waiting line is obtained, whereas the second point only tends to distance the various groups from one another when they are transported from the remanining branch of the intermediate station towards the selection station where the group is drawn by a transverse bar, guided by related chains, which comes in contact at the rear with the end row of the selected group immediately downstream of the final end of the pre-selection station.

In a second solution (see also patent application IT - BO94A000160 by the same Applicant), the selection station is provided with a conveyor interposed between the feeding station and the selection station itself, which is movable in accordance with the direction of advance at a speed higher than the speed at which the feeding station is moved.

The conveyor is moved intermittently thanks to a clutch assembly which allows the engagement and exclusion of the motion according to pre-determined stop and advance times, i.e. to feed the bottles to the selection station as a function of the groups to be formed with those bottles, and respectively a stop to the motion of the bottles, in co-operation with an upper plate able to block the advance of the front of the bottles.

In the solutions mentioned above however, although problems related to the higher uniformity in the working speeds present in the various stations (which speeds are relatively high) were resolved, drawbacks have been noted due, in the first case, to the double stop to the bottles which does not allow a high productivity per time unit owing to mechanical limitations due to the alternate motion of the two blocking walls, in addition to the fact that such walls increase the risk that the bottles may fall as a result of the high speeds of motion involved in the various stations. Moreover, the second wall always requires an adjustment to its distance every time the format of the bottle groups is changed.

In the second case described, the greater drawback is given by the possible lack of homogeneity in the advance of the bottles on the conveyor, or the various rows of bottles could be out of phase due both to the insufficient friction of the conveyor in the initial accelaration phase, and by a lack of bottle continuity on the rows of advancing bottles; all this may therefore lead to a stoppage in the line to allow to restore the correct feeding of the groups. The object of the present invention is therefore to eliminate the drawbacks mentioned above through the realisation of a machine for the selection of groups of products so structured as to allow a correct selection of the groups, with the certainty that the products always remain compacted during their advance, also maintaining a good productivity per unit of time with reduced costs.

The technical characteristics of the invention, according to the aforesaid purposes, are defined in the appended claims and its advantages shall be made more evident in the description that follows, made with reference to the enclosed drawings, which show an embodiment provided purely by way of non limiting example, in which:
- Figures 1, 2 and 3 show a machine constituting the object of the present invention for packaging bottles ; the figures show a succession of respective operating configurations of the selection means in schematic side views with some parts removed the better to show others;
- Figure 4 shows an enlarged detail as per Figure 1 in which the elements comprising part of the subject selection means can be seen; the figure is shown in a schematic side view with some parts removed the better to show others;
- Figure 5 shows a partial view from C with respect to Figure 4 in which a part of the stabilisation and accompaniment means comprised in the subject machine can be seen.

According to the figures of the attached drawings, the machine allows the selection of groups 1 of products, and in particular bottles 2, arranged in multiple rows both transversely, defining a front, and longitudinally defining a continuous line of the bottles themselves.

The machine comprises, among other elements, a station 3 for continuous feeding of the bottles 2 according to a direction of advance indicated with the arrow A and according to a speed Va. This feeding station 3 comprises a first conveyor 4 extending horizontally and enclosing in a loop a first series of motor driven pulleys 5.

In proximity with the downstream end of the feeding station 3, with respect to the aforesaid direction of advance A, is present a station 6 (shown only partially) for the advance of the bottles 2 in groups 1 with pre-determined length, with respect to the direction of advance A; this advancement station 6 comprises a second horizontal conveyor 7 enclosing in a loop a second series of motor driven pulleys 8.

Between these two feeding and advancement stations 3 and 6 are fitted means 9 for selecting the bottles 2, whereby a move of the bottles themselves can be obtained from the feeding station 3 to the advancement station 6 in the aforesaid pre-settable groups 1.

As can be seen in the attached figures, the aforesaid selection means 9 essentially comprise a third conveyor 10, a vertical wall 11, stabilisation and accompaniment means 12 and means 13 for selectively driving the third conveyor 10 and the stabilisation and accompaniment means 12.

More in detail, the third conveyor 10 is coplanar, with its own active branch 10a, to the first and the second conveyor 4 and 7, interposed between them and movable in accordance with the aforesaid direction of advance A at speed V1 higher than the speed Va of the first conveyor 4 thanks to a related motor drive 25 connected to one of the pulleys 26 which move the third conveyor 10. This speed V1 is essentially equal to the speed V3 of the second conveyor 7.

The vertical wall 11 is interposed between the third conveyor 10 and the second conveyor 7, and it is movable vertically in the two directions between a raised position blocking the front of the bottles 2 and respectively a lowered exclusion position, below the aforesaid active branch 10a, allowing passage to the bottles 2.

To obtain these positions the vertical wall 11 is provided with motion means 24 comprising a hydraulic or pneumatic piston, fitted underneath the third conveyor 10.

The stabilisation and accompaniment means 12 are fitted in proximity of the end of the third conveyor 10 closer to the second conveyor 7, and they can be adjusted in height with respect to the third conveyor 10 between a lowered position in contact with the free end of the bottles 2, and a raised position, released from the bottles themselves.

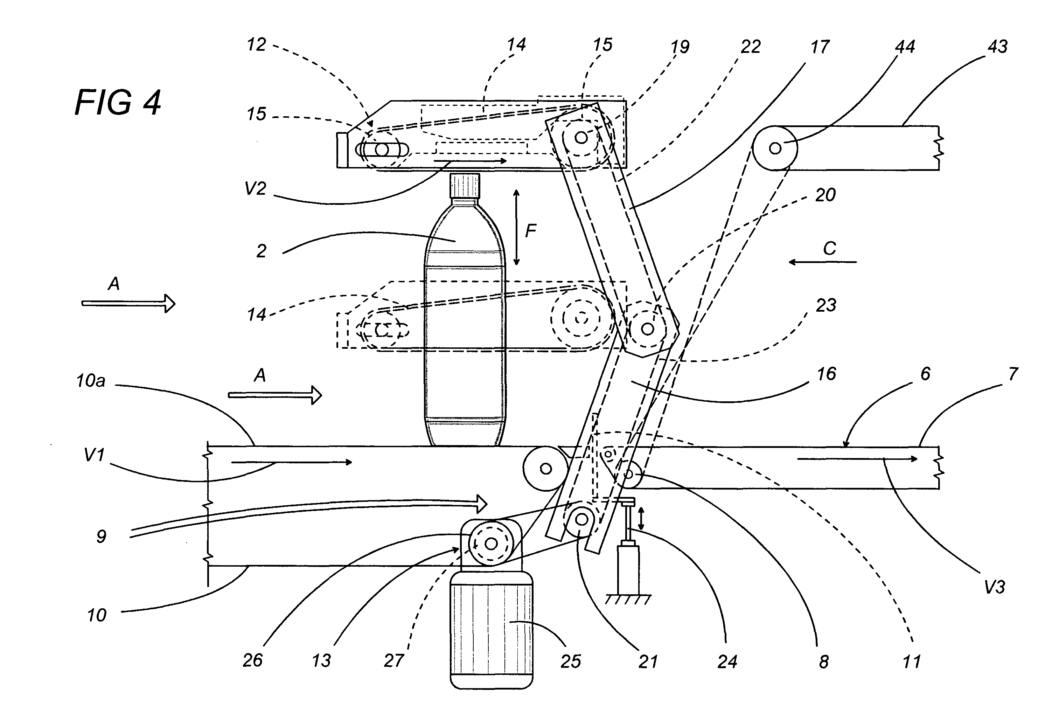

As can also be observed in Figure 4, the stabilisation and accompaniment means comprise one or more belts 14 enclosing in a loop a pair of third pulleys 15 whereof at least one is connected to the aforesaid means 13 in such a way as to obtain a motion of the belts 14 at a speed V2 equal to the aforesaid speed V1 of the third conveyor 10.

As can better be observed in Figure 5, these belts 14 are supported, for each side, by means of a rod, threaded and perpendicular to the third conveyor 10; on each rod 30 is screwed a nut 31 integral with a crosspiece 38 passing above the belts 14 and supporting a vertical piston 18p on each side of which are provided two guides 35 (whereof only one is visible, since the figure is only partial as the structure is essentially specular). The piston 18p and the guides 35 in turn support a plate 39, lying underneath them and parallel to the aforesaid crosspiece 38, connected at its ends to a respective swivelling bushing 40 supporting the first horizontal shaft 32 supporting the third pulleys 15 of the aforesaid belts 14 (the ones downstream with respect to the direction of advance A). The threaded rods 30 are in turn rotatingly supported by a bridge structure 33 fastened to the sides of the machine and they are motorised around their axis, by means of a kinematic mechanism comprising gears 41 and chain 42 and located above the bridge structure 33, in order to move in height the belts 14 (thanks to screwing the nuts 31 in one direction or the other) according to the height of the products to be fed. The minimum height position is shown as a dashed line in Figure 4.

To obtain the aforesaid lowered and raised positions of the belts 14 with respect to the bottles 2, only the vertical piston 18p set above the belts 14 is used, together with the two guides 35 on each side thereof, and with which the belts 14 are raised and lowered away from and towards the bottles 2 (see arrows F in Figures 4 and 5); the lowering and raising stroke of the piston 18p lowers or raises plate 39 to which are integral, as stated above, the bushings 40 supporting the first shaft 32, thus allowing the belts 14 to come in contact with the bottles 2 or to move away from them.

The belts 14 are also connected, at least on one of their sides, with a motion transferring assembly comprising a pair of arms 16 and 17 defining an articulated arm. On the pair of arms 16 and 17 are fastened at least three pairs of gears 19, 20 and 21 whereon are meshed a pair of chains 22 and 23 closed in a loop, in succession, on the gears themselves in order to transfer motion from the means 13, placed underneath the third conveyor 10, to the third pair of pulleys 15. The articulated arm structure allows to maintain constant the motion transfer regardless both of the movement in height of the belts 14 for adjustement with respect to the bottles 2, and of the contact motion of the belt 14 performed with piston 18p.

The aforesaid means 13 for selectively driving the third conveyor 10 and the stabilisation and accompaniment means 12 comprise a known clutch assembly 27 connected to the aforesaid motor drive 25, or to the motor drive 25 alone, actuated or stopped automatically according to the machine cycle. To this motion assembly are connected at least the aforesaid pulley 26 of the third conveyor 10 and one of the chains 22 and 23 of the means 12 to impart the motion to the belts 14.

The means 13 allow a succession of phases by the elements just described starting from a cycle start situation wherein bottles 2 are already present on the third conveyor 10.

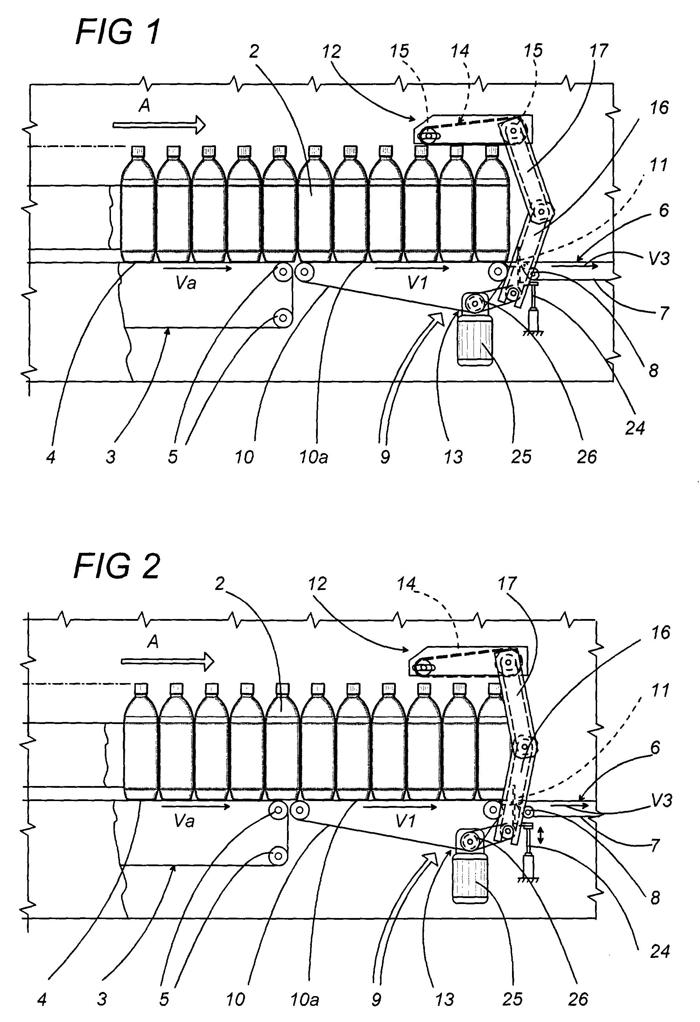

The first phase (shown in Figure 1) entails a stop of the third conveyor 10 in correspondence with the raised position of the wall 11 so as to position the front of the bottles 2 in proximity of the wall itself, but not in contact therewith.

The second phase (shown in Figure 2) entails activating a first time the third conveyor 10, after raising the belts 14 from the upper end of the bottles 2; this motion of the third conveyor 10 allows an advance of the front of the bottles 2, according to direction A, sufficient to obtain contact of the front itself with the raised wall 11 and in such a way as to compact the bottles 2 positioned longitudinally on the third conveyor 10.

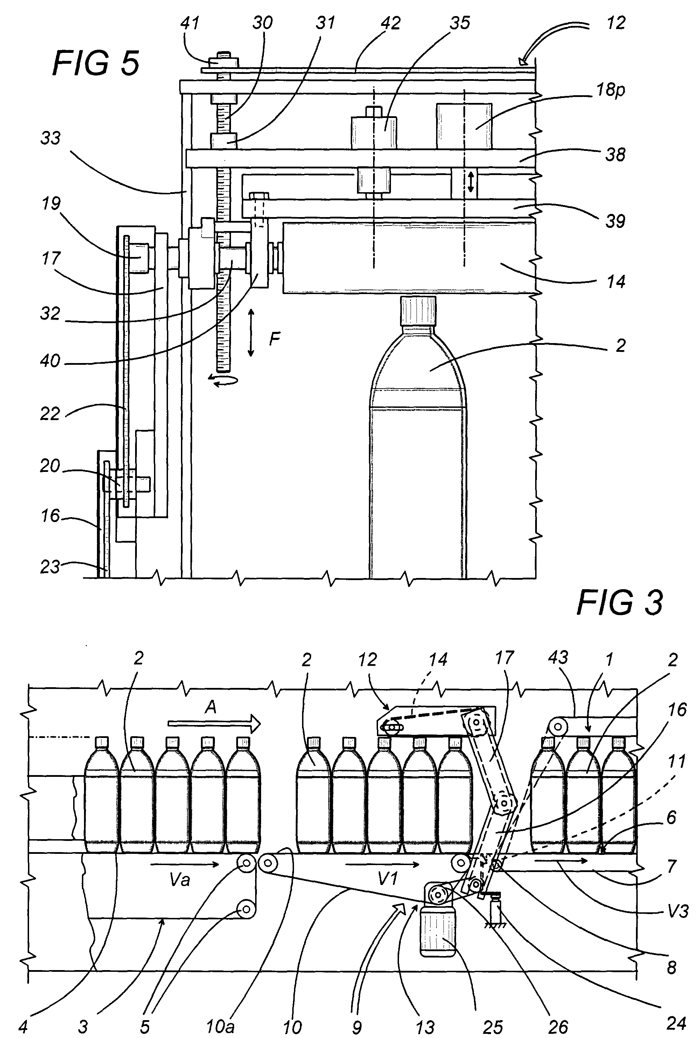

The third phase (shown in Figure 3) entails activating a second time the third conveyor 10 simultaneously with a lowering of the wall 11 and of the belts 14 onto the bottles 2 in order to feed a number of bottles 2 towards the second conveyor 7 according to their predetermined groups 1, and obtaining a simultaneous distancing of the latter group from the subsequent said bottles 2 arriving from the first conveyor 4.

Obviously, the first and second activation of the third conveyor 10 may be merged in a single activation if the descent speed of the wall 11 is sufficiently high to avoid a possible arrest phase of the third conveyor 10 to wait for the descent of the wall 11.

Upon passage of the group 1 of bottles 2, there is another arrest of the third conveyor 10 to perform anew the sequence of phases just described.

To obtain a higher stability of the bottles 2 selected, it is possible to insert a second belt 43 above the second conveyor 7 immediately downstream of the belts 14 (see in particular Figures 3 and 4). This second belt is closed on related pulleys 44 whereof one is directly driven by means of one of the pulleys 8 of the second conveyor 7: in this way the bottles 2 exiting the third conveyor 10 are held, for a certain length, both below and above at the same speed so as to keep them stable even after the acceleration imparted by the second activation of the third conveyor 10. This second belt 43 can be adjusted in height only when changing product format.

The machine just described therefore attains its purposes thanks to a simple and economical structure, in addition to being able to be adapted to any kind of product thanks to the adjustment in height of the belts 14.

The stop and re-start phase of the bottles, together with contact with the upper belts, makes the bottles remain stable during their feeding and selection; the phase entailing compacting the bottles against the vertical wall prevents an out-of-phase condition of the bottles by several rows arriving from the first conveyor, even if upstream of them there should be feeding gaps.

## Claims

1. A machine for the selection of groups of products, the machine comprising at least one station (3) for the continuous feeding of said products according to a direction of advance (A) and at a speed (Va), said station (3) comprising a first conveyor (4) with horizontal extension enclosing in a loop a first series of motor-driven pulleys (5); in correspondence with the downstream end of said feeding station (3), with respect to said direction of advance (A), being provided a station (6) for advancing the products, in groups (1) whose longitudinal dimension, with respect to said direction of advance (A), are pre-determined and comprising a second horizontal conveyor (7) enclosing in a loop a second series of motor-driven pulleys (8); selection means (9) being provided between said feeding station (3) and said advancement station (6) and acting on said products (2) so as to define their transfer from said feeding station (3) to said advancement station (6) in said pre-determinable groups (1), said selection means (9) comprising:
- a third conveyor (10) coplanar, with its own active branch (10a), with said first and second conveyor (4, 7), interposed between them and movable in accordance with said direction of advance (A) at a speed (V1) exceeding that of said speed (Va) of said first conveyor (4);
- stabilisation and accompaniment means (12);
- means (13) for selectively driving the third conveyor (10) and said stabilisation and accompaniment means (12), acting on both;
characterised in that said selection means (9) further comprise:
- a vertical wall (11) interposed between said third conveyor (10) and said second conveyor (7), movable vertically in the two directions between one raised position to block the front of said products (2) and respectively a lowered position of exclusion underneath said active branch (10a) and of

2. Machine according to claim 1, characterised in that said stabilisation and accompaniment means (12) comprise at least one belt (14) enclosing in a loop a pair of third pulleys whereof at least one is connected to said means (13) for selectively driving the third conveyor (10) in such a way as to obtain the motion of said at least one belt at a speed (V2) equal to that of said speed (V1) of said third conveyor (10).

3. Machine according to claim 2, characterised in that said at least one belt (14) is supported, at each side, by a structure provided with a threaded rod (30), set perpendicularly to said third conveyor (10), and whereto a crosspiece (38) is coupled by means of a nut (31) integral therewith, passing transversely above said at least one belt (14), and having at both ends a respective bushing (40) rotatingly supporting a first horizontal shaft (32) supporting said third pulleys (15) located downstream with respect to said direction of advance (A); said threaded rods (30) being in turn rotatingly supported by a bridge structure (33) fastened to the sides of the machine and said rods (30) being motor driven around their axis so as to allow a variation in height of said at least one belt (14) according to the height of said products (2) to be fed.

4. Machine according to claim 3, characterised in that said crosspiece (38) supports a vertical piston (18p) on each side thereof are provided guides (35) supporting a plate (39), laying underneath them and parallel to the aforesaid crosspiece (38); at the ends of said plate (39) being integral respective said bushings (40) rotatingly supporting said first horizontal shaft (32) for imparting motion to said third pulleys (15); said piston (18p) acting on said plate (39) in such a way as to move said at least one belt (14) between a raised position for moving away from said products (2), and a lowered position of contact of said belt (14) with the upper end of said products (2).

5. Machine according to claim 2, characterised in that said at least one belt (14) is provided with means for transferring motion comprising a pair of arms (16, 17) defining an articulated arm; on said arms (16, 17) being fastened at least three pairs of gears (19, 20, 21) whereto is meshed at least one pair of chains (22, 23) enclosing in a loop the same and able to allow the transfer of motion from said means (13) for selectively driving the third conveyor (10), located underneath said third conveyor (10), to said third pair of pulleys (15).

6. Machine according to claim 1, characterised in that said vertical wall (11) is provided with means (24) for imparting motion comprising a fluid-driven piston located underneath said third conveyor (10), and able to allow said raised and respectively lowered position of the wall itself.

7. Machine according to claim 1, characterised in that said second conveyor (7) is provided with a second accompanying belt (43) located above the second conveyor itself and immediately downstream of said stabilisation and accompaniment means (12); said second belt (43) being enclosing in a loop a pair of related pulleys (44) whereof one is connected to one of said second pulleys (8).

8. Machine according to claim 1, characterised in that said second conveyor (7) presents a speed (V3) which is essentially equal to said speed (V1) of said third conveyor (10).

## Patentansprüche

1. Maschine zum Auswählen von Gruppen von Produkten, enthaltend wenigstens eine Station (3) zum kontinuierlichen Zuführen der genannten Produkte in Übereinstimmung mit einer Vorschubrichtung (A) und mit einer Geschwindigkeit (Va), wobei die genannte Station (3) ein erstes Förderband (4) enthält, das sich horizontal erstreckt und ringförmig eine erste Serie von angetriebenen Riemenscheiben (5) einschliesst; wobei entsprechend zu dem sich stromabwärts befindlichen Ende der genannten Zuführstation (3), im Verhältnis zu der genannten Vorschubrichtung (A), eine Station (6) für den Vorschub der Produkte in Gruppen (1), deren Längenabmessungen vorbestimmt sind, vorgesehen ist, und die ein zweites horizontales Förderband (7) enthält, das ringförmig eine zweite Serie von angetriebenen Riemenscheiben (8) einschliesst; und wobei Auswählmittel (9) zwischen der genannten Zuführstation (3) und der genannten Vorschubstation (6) vorgesehen sind, die auf die genannten Produkte (2) wirken, so dass deren Weiterleitung in Form der genannten, vorbestimmten Gruppen (1) von der genannten Zuführstation (3) zu der genannten Vorschubstation (6) erfolgt, wobei die genannten Auswahlmittel (9) wie folgt enthalten:
- ein drittes Förderband (10), das mit seinem aktiven Trum (10a) zu dem genannten ersten und zweiten Förderband (4, 7) koplanar, zwischen diesen eingesetzt und in Übereinstimmung mit der genannten Vorschubrichtung (A) mit einer Geschwindigkeit (V1) beweglich ist, die über die genannte Geschwindigkeit (Va) des genannten ersten Förderbandes (4) hinausgeht;
- Stabilisier- und Führungsmittel (12);
- Mittel (13) für den wahlweisen Antrieb des dritten Förderbandes (10) und der genannten Stabilisier- und Führungsmittel (12),
**dadurch gekennzeichnet,** dass die genannten Auswahlmittel (9) weiter enthalten:
- eine vertikale Wand (11), eingesetzt zwischen dem genannten dritten Förderband (10) und dem genannten zweiten Förderband (7), die vertikal in beiden Richtungen zwischen einer angehobenen Position zum Blockieren der Frontseite der genannten Produkte (2), beziehungsweise einer gesenkten, ausgeschlossenen Position unterhalb des genannten aktiven Trums (10a) und für den Durchlauf der genannten Produkte (2) beweglich ist;
- wobei die genannten Stabilisier- und Führungsmittel (12) in der Nähe des Endes des genannten dritten Förderbandes (10) und dichter an dem genannten zweiten Förderband (7) angeordnet sind, und zwar einstellbar in der Höhe im Verhältnis zu dem genannten dritten Förderband (10) zwischen einer gesenkten Position im Kontakt mit dem freien Ende der genannten Produkte (2) und einer angehobenen Position der Freigabe von den Produkten selbst;
- wobei die genannten Mittel (13) für den wahlweisen Antrieb des dritten Förderbandes (10) und der genannten Stabilisier- und Führungsmittel (12) dazu geeignet sind, aufeinanderfolgend die folgenden Phasen auszuführen:
- Anhalten des dritten Förderbandes (10) in Übereinstimmung mit der angehobenen Position der genannten Wand (11), so dass die Frontseite der genannten Produkte (2) in der Nähe der Wand (11) angeordnet wird;
- ein erstes Aktivieren des genannten dritten Förderbandes (10) in Übereinstimmung mit der genannten angehobenen Position der genannten Stabilisiermittel (12) vom oberen Ende der genannten Produkte (2), so dass ein Vorlaufen der Frontseite der genannten Produkte (2) um ein Stück erlaubt ist, das ausreicht, um einen Kontakt der Frontseite mit der genannten Wand (11) auf solche Weise zu erhalten, dass die genannten, in Längsrichtung auf dem genannten dritten Förderband (10) angeordneten Produkte (2) kompaktiert werden; und
- ein zweites Aktivieren des genannten dritten Förderbandes (10) in Übereinstimmung mit einer gesenkten Position der genannten Wand (11) und der genannten gesenkten Position des Kontaktes der genannten Stabilisiermittel (12) mit dem genannten oberen Ende der genannten Produkte (2), so dass die Produkte selbst in genannten vorbestimmten Gruppen (1) in Richtung des genannten zweiten Förderbandes (7) weitergeleitet werden, und um gleichzeitig einen Abstand letzterer Gruppe von den auf dem genannten ersten Förderband (4) ankommenden genannten Produkten (2) zu erhalten.

2. Maschine nach Patentanspruch 1, **dadurch gekennzeichnet,** dass die genannten Stabilisier- und Führungsmittel (12) wenigstens ein Band (14) enthalten, der ringförmig ein Paar von dritten Riemenscheiben (15) einschliesst, von denen wenigsten eine an die genannten Mittel (13) für den wahlweisen Antrieb des dritten Förderbandes (10) auf solche Weise angeschlossen ist, dass eine Bewegung des genannten wenigstens einen Bandes mit einer Geschwindigkeit (V2) erhalten wird, die der genannten Geschwindigkeit (V1) des genannten dritten Förderbandes (10) entspricht.

3. Maschine nach Patentanspruch 2, **dadurch gekennzeichnet,** dass das genannte wenigstens eine Band (14) auf jeder Seite von einer Struktur getragen wird, versehen mit einer Gewindestange (30), die lotrecht zu dem genannten dritten Förderband (10) angeordnet ist, und mit welcher über einen Gewindering (31) ein mit letzterem in einem Stück gearbeiteter Querträger (38) verbunden ist, der sich in Querrichtung oberhalb des genannten wenigstens einen Bandes (14) erstreckt und an beiden Enden eine jeweilige Buchse (40) aufweist, die drehbar eine erste, die genannten dritten Riemenscheiben (15) tragende horizontale Welle (32) aufweist und im Verhältnis zu der genannten Vorschubrichtung (A) stromabwärts angeordnet ist; wobei die genannten Gewindestangen (30) wiederum drehbar von einer Brückenstruktur (33) getragen werden, befestigt an den Seiten der Maschine, und die genannten Stangen (30) um ihre Achse angetrieben sind, so dass ein Verstellen in der Höhe des genannten wenigstens einen Bandes (14) je nach der Höhe der zuzuführenden Produkte (2) erlaubt ist.

4. Maschine nach Patentanspruch 3, **dadurch gekennzeichnet,** dass der genannte Querträger (38) einen vertikalen Kolben (18p) trägt, der auf jeder Seite mit eine Platte (39) tragenden Führungen (35) versehen ist, welche Platte unterhalb diesen liegt und parallel zu dem genannten Querträger (38) verläuft; wobei sich an den Enden der genannten Platte (39) die jeweiligen genannten Buchsen (40) befinden, welche drehbar die genannte erste horizontale Welle (32) zum Übertragen des Antriebs auf die genannten dritten Riemenscheiben (15) tragen; und wobei der genannte Kolben (18p) auf solche Weise auf die genannte Platte (39) wirkt, dass das genannte wenigstens eine Band (14) zwischen einer angehobenen Position zum Entfernen der genannten Produkte (2) und einer gesenkten Position im Kontakt des genannten Bandes (14) mit dem oberen Ende der genannten Produkte (2) bewegt wird.

5. Maschine nach Patentanspruch 2, **dadurch gekennzeichnet,** dass das genannte wenigstens eine Band (14) mit Übertragungsmitteln für den Antrieb versehen ist, enthaltend ein Paar von Armen (16, 17), die einen Gelenkarm bilden; wobei an den genannten Armen (16, 17) wenigstens drei Paare von Zahnrädern (19, 20, 21) befestigt sind, über welche wenigstens ein Paar von Ketten (22, 23) greift, welche dieselben ringförmig einschliessen und das Übertragen der Bewegung von den genannten, unterhalb des genannten dritten Förderbandes (10) angeordneten Mitteln (13) für den wahlweisen Antrieb des dritten Förderbandes (10) auf das genannte dritte Paar von Riemenscheiben (15) erlauben.

6. Maschine nach Patentanspruch 1, **dadurch gekennzeichnet,** dass die genannte vertikale Wand (11) mit Antriebsmitteln (24) versehen ist, die einen strömungsbetätigten, unterhalb des genannten dritten Förderbandes (10) angeordneten Kolben enthalten und in der Lage sind, die genannte angehobene beziehungsweise gesenkte Position der Wand selbst zu ermöglichen.

7. Maschine nach Patentanspruch 1, **dadurch gekennzeichnet,** dass das genannte zweite Förderband (7) mit einem zweiten Führungsband (43) versehen ist, angeordnet oberhalb des zweiten Förderbandes selbst und unmittelbar stromabwärts der genannten Stabilisier- und Führungsmittel (12); wobei das genannte zweite Band (43) ringförmig um ein Paar von entsprechenden Riemenscheiben (44) geschlossen ist, eine von diesen angeschlossen an eine der genannten zweiten Riemenscheiben (8).

8. Maschine nach Patentanspruch 1, **dadurch gekennzeichnet**, dass das genannte zweite Förderband (7) eine Geschwindigkeit (V3) aufweist, die im wesentlichen gleich der genannten Geschwindigkeit (V1) des genannten dritten Förderbandes (10) ist.

## Revendications

1. Une machine pour la sélection de lots de produits, la machine comprenant au moins une station (3) pour l'alimentation continue de ces produits suivant une direction d'avance (A) et à une vitesse (Va), ladite station (3) comprenant une première bande transporteuse (4) à développement horizontal fermée en boucle sur une première série de poulies motorisées (5) ; au niveau de l'extrémité d'aval de ladite station d'alimentation (3), par rapport à ladite direction d'avance (A), une station (6) étant prévue pour l'avance des produits, en lots (1) dont la dimension longitudinale par rapport à cette même direction d'avance (A) est prédéterminée, et comprenant une deuxième bande transporteuse horizontale (7) fermée en boucle sur une deuxième série de poulies motorisées (8) ; des moyens de sélection (9) étant prévus entre ladite station d'alimentation (3) et ladite station d'avance (6) pour agir sur lesdits produits (2), de manière à assurer leur transfert de ladite station d'alimentation (3) à ladite station d'avance (6) dans les lots (1) en question préconfigurables, lesdits moyens de sélection (9) comprenant :
- une troisième bande transporteuse (10), dont la branche active (10a) est coplanaire aux première et deuxième bandes transporteuses (4, 7) susmentionnées, interposée entre ces dernières et pouvant se déplacer suivant ladite direction d'avance (A) à une vitesse (V1) supérieure à la vitesse (Va) de ladite première bande transporteuse (4) ;
- des moyens de stabilisation et d'accompagnement (12) ;
- des moyens (13) pour l'actionnement sélectif de la troisième bande transporteuse (10) et des moyens de stabilisation et d'accompagnement (12) susmentionnés, agissant sur ces deux éléments ;
caractérisée en ce que lesdits moyens de sélection (9) comprennent également :
- une paroi verticale (11) interposée entre ladite troisième bande transporteuse (10) et ladite deuxième bande transporteuse (7), verticalement mobile dans les deux sens entre une position haute de blocage du front des produits (2) et, respectivement, une position basse d'exclusion en dessous de ladite branche active (10a) et de passage de ces mêmes produits (2) ;
- les moyens de stabilisation et d'accompagnement (12) étant placés à proximité de l'extrémité de la troisième bande transporteuse (10) la plus proche de la deuxième bande transporteuse (7), et étant réglables en hauteur par rapport à cette même troisième bande transporteuse (10) entre une position basse de contact avec l'extrémité libre des produits (2) et une position haute d'éloignement de ces mêmes produits ;
- lesdits moyens (13) pour l'actionnement sélectif de la troisième bande transporteuse (10) et des moyens de stabilisation et d'accompagnement (12) étant destinés à exécuter les phases suivantes, en séquence :
- un arrêt de la troisième bande transporteuse (10) au niveau de ladite position haute de ladite paroi (11), de manière à placer le front des produits (2) à proximité de cette même paroi ;
- une première activation de la troisième bande transporteuse (10), au niveau de ladite position haute des moyens de stabilisation (12) par rapport à l'extrémité supérieure des produits (2), de manière à permettre au front des produits (2) d'avancer suffisamment pour venir en contact avec ladite paroi (11) et de manière à compacter les produits (2) disposés longitudinalement sur ladite troisième bande transporteuse (10) ; et
- une deuxième activation de la troisième bande transporteuse (10) au niveau d'une position basse de ladite paroi (11) et de ladite position basse de contact des moyens de stabilisation (12) avec l'extrémité supérieure des produits (2), de manière à alimenter ces mêmes produits vers ladite deuxième bande transporteuse (7) conformément aux lots prédéterminés (1) et à distancer en même temps le dernier lot des produits (2) qui arrivent depuis la première bande transporteuse (4).

2. Machine selon la revendication 1, caractérisée en ce que lesdits moyens de stabilisation et d'accompagnement (12) comprennent au moins une courroie (14) fermée en boucle sur une paire de troisièmes poulies dont l'une au moins est reliée aux moyens (13) susmentionnés pour l'actionnement sélectif de la troisième bande transporteuse (10), de manière à entraîner ladite courroie au moins à une vitesse (V2) égale à ladite vitesse (V1) de la troisième bande transporteuse (10).

3. Machine selon la revendication 2, caractérisée en ce que ladite courroie (14) au moins est supportée, de chaque côté, par une structure dotée d'une tige filetée (30), placée perpendiculairement à ladite troisième bande transporteuse (10), et sur laquelle une traverse (38) est associée au moyen d'un écrou (31) qui lui est solidaire, cette traverse (38) passant transversalement au-dessus de ladite courroie (14) au moins et ayant, à chaque extrémité, une douille respective (40) supportant de manière rotative un premier arbre horizontal (32) qui supporte à son tour lesdites troisièmes poulies (15) situées en aval par rapport à ladite direction d'avance (A) ; lesdites tiges filetées (30) étant à leur tour supportées de manière rotative par une structure en pont (33) fixée sur les côtés de la machine et lesdites tiges (30) étant motorisées sur leur axe de manière à permettre une variation en hauteur d'au moins ladite courroie (14) en fonction de la hauteur des produits (2) à alimenter.

4. Machine selon la revendication 3, caractérisée en ce que ladite traverse (38) supporte un piston vertical (18p) de chaque côté duquel sont prévus des guides (35) qui supportent un plateau (39), situé en dessous d'eux et parallèle à ladite traverse (38) ; des douilles (40) respectives étant solidaires des extrémités du plateau (39) en question et supportant de manière rotative ledit premier arbre horizontal (32) pour transmettre le mouvement aux troisièmes poulies (15) ; ledit piston (18p) agissant sur ledit plateau (39) de manière à déplacer ladite courroie (14) au moins entre une position haute d'éloignement des produits (2) et une position basse de contact de cette même courroie (14) avec l'extrémité supérieure des produits (2).

5. Machine selon la revendication 2, caractérisée en ce qu'au moins ladite courroie (14) est équipée de moyens de transmission du mouvement comprenant une paire de bras (16, 17) qui définissent un bras articulé ; sur ces bras (16, 17) étant fixées au moins trois paires de roues dentées (19, 20, 21) sur lesquelles est engrenée au moins une paire de chaînes (22, 23) fermées en boucle sur celles-ci et permettant la transmission du mouvement des moyens (13) pour l'actionnement sélectif de la troisième bande transporteuse (10), placés sous cette même troisième bande transporteuse (10), à ladite troisième paire de poulies (15).

6. Machine selon la revendication 1, caractérisée en ce que ladite paroi verticale (11) est munie de moyens d'actionnement (24) consistant en un piston hydrodynamique placé en dessous de la troisième bande transporteuse (10), et permettant ladite position haute et, respectivement, basse de cette même paroi.

7. Machine selon la revendication 1, caractérisée en ce que ladite deuxième bande transporteuse (7) est dotée d'une deuxième courroie d'accompagnement (43) placée au-dessus de cette même deuxième bande transporteuse, juste en aval des moyens de stabilisation et d'accompagnement (12) susmentionnés ; ladite deuxième courroie (43) étant fermée en boucle sur une paire de poulies (44) correspondantes dont l'une est reliée à l'une des deuxièmes poulies (8) susmentionnées.

8. Machine selon la revendication 1, caractérisée en ce que ladite deuxième bande transporteuse (7) présente une vitesse (V3) qui est essentiellement égale à ladite vitesse (V1) de la troisième bande transporteuse (10).
